## Europäisches Patentamt

## European Patent Office

## Office européen des brevets

(19)

(11) Publication number: **0 115 377**
**B1**

(12) **EUROPEAN PATENT SPECIFICATION**

(45) Date of publication of patent specification: **23.03.88**

(21) Application number: **84300045.6**

(22) Date of filing: **05.01.84**

(51) Int. Cl.⁴: **F 28 F 27/00,** F 28 C 1/00, G 05 D 23/20

(54) Systems for controlling the operation of cooling towers.

(30) Priority: **31.01.83 US 462599**

(43) Date of publication of application:
**08.08.84 Bulletin 84/32**

(45) Publication of the grant of the patent:
**23.03.88 Bulletin 88/12**

(84) Designated Contracting States:
**DE FR GB IT**

(56) References cited:
**DE-A-3 133 831**
**US-A-4 252 751**
**US-A-4 325 223**
**PATENTS ABSTRACTS OF JAPAN, Vol. 7, No. 47 (M-196) (1192), February 24, 1983.**
**PATENTS ABSTRACTS OF JAPAN, Vol. 4, No. 99, (M-21) (581), July 16, 1980, page 16.**
**REVUE PRATIQUE DU FROID ET DU CONDITIONNEMENT DE L'AIR. Vol. 24, No. 304, November 1971, G. ANDREIEFF: "Etude technologique des principaux types de matériels utilisés dans une installation de conditionnement de l'air". Pages 81-87**

(73) Proprietor: **THE BABCOCK & WILCOX COMPANY**
**1010 Common Street P.O. Box 60035**
**New Orleans Louisiana 70160 (US)**

(72) Inventor: **Kaya, Azima**
**2365 Woodpark Road**
**Akron Ohio 44313 (US)**
Inventor: **Moss, William H.**
**34996A N. Turtle Trail**
**Willoughby Ohio 44094 (US)**

(74) Representative: **Cotter, Ivan John et al**
**D. YOUNG & CO. 10 Staple Inn**
**London WC1V 7RD (GB)**

(56) References cited:
**PATENTS ABSTRACTS OF JAPAN, Vol. 4, No. 60 (M-10), May 6, 1980, page 49**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to systems for controlling the operation of cooling towers.

Various methods have been utilized for controlling cooling tower water temperatures. For example, in some instances the water temperature is controlled so as to be substantially constant through the use of analog equipment. An inherent disadvantage of this approach is that system efficiency cannot be optimized since the water temperature remains substantially constant. Another approach is to vary the water temperature set point in response to changes in weather conditions. This approach typically requires a computer to calculate the set point temperature which, in turn, is utilized to modify the speed of fans within the cooling tower. A still another approach is to optimize the overall cooling system by varying the cooling water temperature. The latter two approaches require the use of a computer which is costly to acquire and maintain due to the hardware and/or software required and the trained personnel required to operate same.

Because of the foregoing, it has become desirable to develop a system for optimizing the water temperature within a cooling tower without the use of a computer or analog equipment.

US patent no US—A—4 252 751 discloses a system for controlling the operation of a cooling tower, the system comprising means for determining the wet bulb temperature of the air surrounding the cooling tower and producing a signal representative thereof, and first means for comparing the signal representing the wet bulb temperature of the air surrounding the cooling tower with a signal representing the temperature of water within the cooling tower to produce an output signal to be utilized to control the temperature of the water within the cooling tower.

According to the present invention there is provided a system for controlling the operation of a cooling tower, the system being as described above with reference to US—A—4 252 751, and being characterised by means for adjusting the signal representing the wet bulb temperature by a predetermined quantity prior to its being compared by the first comparing means with the signal representing the temperature of the water within the cooling tower, means for establishing a signal representing a preset reference temperature, and second means for comparing the adjusted wet bulb temperature signal with the preset reference temperature signal and causing whichever of the adjusted wet bulb temperature signal and the preset reference temperature signal that represents the higher temperature to be compared by the first comparing means with the signal representing the temperature of the water within the cooling tower, the output signal being produced by the first comparing means in response to a difference between the temperature of the water within the cooling tower and the higher of the adjusted wet bulb temperature and the preset reference temperature.

A preferred embodiment of the present invention described hereinbelow solves or at least alleviates the aforementioned problems associated with the prior art by utilizing function blocks having fixed functional relations to provide calculating features which are generally only available through the use of computers. Measurements of the temperature and relative humidity of the outside air are taken and processed through the use of the function blocks to determine the wet bulb temperature of the outside air. This wet bulb temperature is adjusted by a predetermined quantity and used as a basis for comparison with the cooling tower water temperature, and the speed of fans of the cooling tower is caused to increase or decrease depending on whether the cooling tower water temperature is too high or too low for optimum operation of the overall system.

The invention will now be further described, by way of illustrative and non-limiting example, with reference to the accompanying drawings, in which:

Figure 1 is a schematic diagram of a cooling tower and a control logic module embodying the invention;

Figure 2 is a schematic diagram of a moisture ratio logic module, an energy content (enthalpy) logic module and other function blocks which make up the control logic module of Figure 1;

Figure 3 is a schematic diagram of function blocks which make up the moisture ratio logic module of Figure 2;

Figure 4 is a graph illustrating the relationship between the evaporation pressure ($P_s$) of water with respect to the temperature of the outside air;

Figure 5 is a schematic diagram of function blocks which make up the energy content (enthalpy) logic module of Figure 2; and

Figure 6 is a graph illustrating the relationship between the wet bulb temperature of the outside air and the energy content (enthalpy) of the outside air.

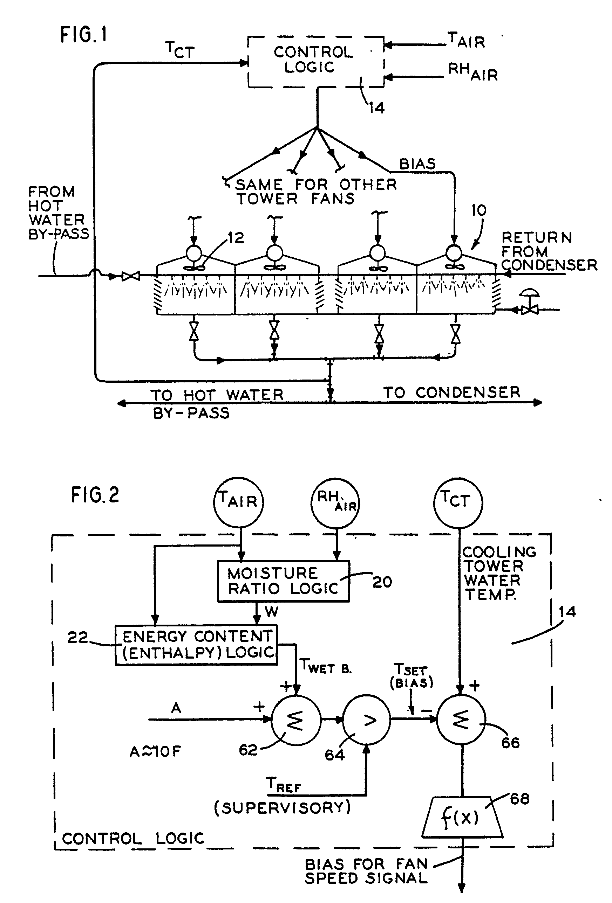

Referring now to the drawings, Figure 1 is a schematic diagram of a cooling tower 10, illustrating fans 12 utilized therein, and a control logic module 14 employed to regulate and optimize the operation of the fans 12. The principle on which the illustrated arrangement or system operates is that, whenever the cooling tower temperature is more than 5.5°C (10°F) above the wet bulb temperature of the outside air, the tower temperature is reduced by increasing the level of fan operation. Thus, the control system lowers the cooling tower temperature whenever a lower cooling tower water temperature will result in a more than commensurate saving in compressor power consumption. In addition, the system conserves fan energy when the cooling tower temperature is sufficiently low.

As shown in Figure 1, measurements of the temperature ($T_{AIR}$) and relative humidity ($RH_{AIR}$) of the outside air and the cooling tower water temperature ($T_{CT}$) are used as inputs to the control logic module 14. Subsystem logic modules comprising the control logic module 14 and remaining function blocks comprising the module 14 are shown in Figure 2. The foregoing subsystem logic modules include a moisture ratio logic module 20 and an energy content (enthalpy) logic module 22. These subsystem logic modules are arranged such that the measurement of the outside air temperature is used as an input to both of these logic modules 20 and 22, whereas the measurement of the relative humidity of the outside air is used as an input only to the moisture ratio logic module 20. The moisture ratio, w, which is the output of moisture ratio logic module, is an input to the energy content (enthalpy) logic module 22.

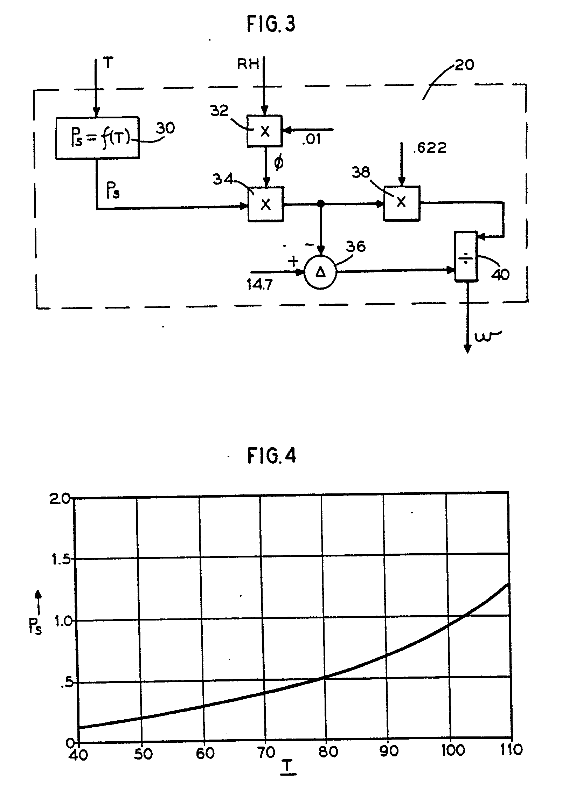

The function blocks comprising the moisture ratio logic module 20 are illustrated in Figure 3. In this Figure, the measurement of the outside air temperature is used as an input to a function generator 30 which produces an output signal, $P_s$, in accordance with the graphical relationship shown in Figure 4. This output signal, $P_s$, represents the evaporation pressure of water with respect to the temperature (T) of the outside air. The measurement of the relative humidity of the outside air is used as an input to a multiplication function block 32 wherein it is multiplied by the factor .01 to produce a signal $\Phi = .01RH$ at its output. This signal $\Phi$ and the evaporation pressure of water, $P_s$, are used as inputs to a multiplication function block 34 which produces an output signal representative of the function $\Phi P_s$ at its output. This output signal is applied to the negative input to a subtraction function block 36. The other input to this function block 36 is the factor 14.7 which is applied to the positive input thereto. The output of the function block 36 is a signal representative of the relationship $14.7 - \Phi P_s$. The output signal, $\Phi P_s$, produced by the multiplication function block 34, is also applied as an input signal to a multiplication function block 38 wherein it is multiplied by the factor .622 to produce a signal representative of the relationship $(.622) \Phi P_s$ at its output. This output signal, along with the output signal produced by the subtraction function block 36, are used an inputs to a division function block 40 which produces the output signal, w, according to the following equation:

$$w = \frac{(.622) \Phi P_s}{14.7 - \Phi P_s}$$

This output signal w is representative of the moisture ratio of the outside air, i.e., the weight amount of moisture per unit weight of dry air.

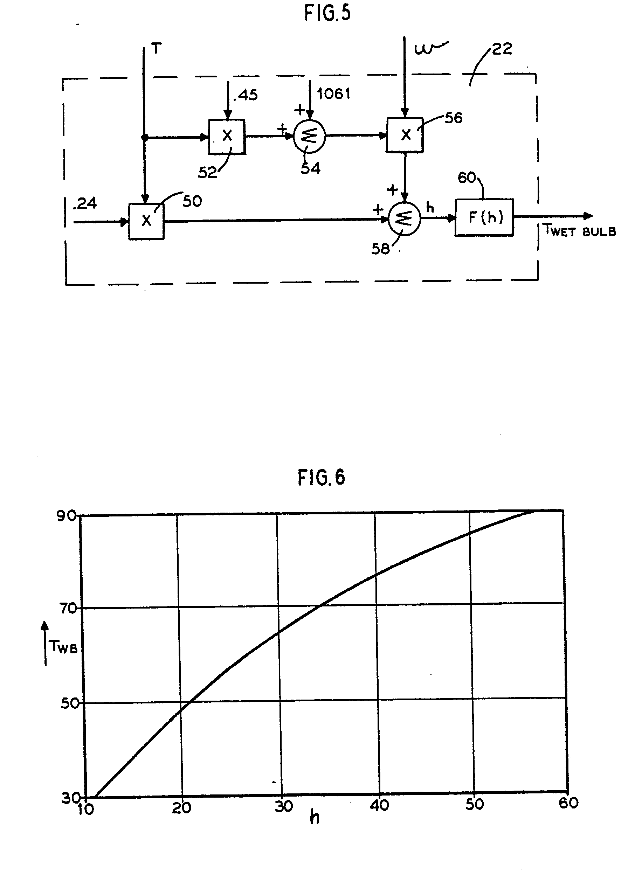

The function blocks comprising the energy content (enthalpy) logic module 22 are illustrated in Figure 5. In this Figure, the measurement of the outside air temperature is used as a separate input to multiplication function blocks 50 and 52. In multiplication function block 50, this outside air temperature measurement is multiplied by the factor .24 to produce a signal equal to .24T as its output, whereas in multiplication function block 52 the outside air temperature measurement is multiplied by the factor .45 to produce a signal equal to .45T at its output. This latter output signal is applied as an input to an additional function block 54 whose other input is the factor 1061 so as to produce a signal representative of the summation $1061 + .45T$ as its output. This signal representative of the summation $1061 + .45T$, along with the output signal w produced by the division function block 40 of Figure 3, are used as inputs to a multiplication function block 56 which produces a signal representative of the function $w (1061 + .45T)$ at its output. This latter signal, along with the output signal produced by multiplication function block 50, i.e., .24T, are applied as inputs to an addition function block 58 to produce an output signal, h, according to the following equation:

$$h = .24T + w(1061 + .45T)$$

This output signal h is representative of the energy content (enthalpy) of moist air per 0.4536 kg(lb) of dry air and is used as an input to a function generator 60 which produces an output signal $T_{wet\ bulb}$ in accordance with the graphical relationship shown in Figure 6. This output signal, $T_{wet\ bulb}$, represents the wet bulb temperature of the moist outside air.

Referring again to Figure 2, the foregoing signal representing the wet bulb temperature is applied as an input to an addition function block 62 whose other input is the factor $A \approx 5.5°C\ (10°F)$ so as to produce an output signal representative of the optimum set point for the system, i.e., 5.5°C (10°F) higher than the wet bulb temperature. This output signal is applied as an input to a comparison function block 64 whose other input is a supervisory reference temperature. The operation of comparison function block 64 is such that if the supervisory reference temperature is greater than the optimum set point as determined by the addition function block 62, the supervisory reference temperature is passed therethrough and appears at the output of the comparison function block 64. However, if this is not the case, the optimum set point as determined by the function block 62 appears at the output of the comparison function block 64. The output of the comparison function block 64 is applied to the negative input to an addition function block 66 along with the measurement of the cooling tower water temperature which is applied to the positive input thereto. The output of the function block 66 is applied to a function generator 68 which produces an output signal that acts as a bias or control signal for the fan speed. In this manner, if the cooling tower water temperature exceeds the wet bulb temperature of the air by more than 5.5°C (10°F) or if the cooling tower temperature exceeds the supervisory reference temperature, depending upon which input to function block 64 is controlling, the output signal produced by the function generator 68 will cause the speed of the fans 12 to increase. Conversely, if the cooling tower water temperature is less than 5.5°C (10°F) above the wet bulb temperature of the air or if the water temperature is less than the supervisory reference temperature, depending upon which input to the function block 64 is controlling, the output signal produced by the function generator 68 will cause the speed of the fans 12 to decrease.

## Claims

1. A system for controlling the operation of a cooling tower, the system comprising means (20, 22) for determining the wet bulb temperature of the air surrounding the cooling tower (10) and producing a signal representative thereof, and first means (66) for comparing the signal representing the wet bulb temperature of the air surrounding the cooling tower with a signal representing the temperature of water within the cooling tower to produce an output signal to be utilized to control the temperature of the water within the cooling tower (10), the system being characterised by means (62) for adjusting the signal representing the wet bulb temperature by a predetermined quantity (A) prior to its being compared by the first comparing means (66) with the signal representing the temperature of the water within the cooling tower (10), means for establishing a signal representing a preset reference temperature, and second means (64) for comparing the adjusted wet bulb temperature signal with the preset reference temperature signal and causing whichever of the adjusted wet bulb temperature signal and the preset reference temperature signal that represents the higher temperature to be compared by the first comparing means (66) with the signal representing the temperature of the water within the cooling tower (10), the output signal being produced by the first comparing means (66) in response to a difference between the temperature of the water within the cooling tower (10) and the higher of the adjusted wet bulb temperature and the preset reference temperature.

2. A system according to claim 1, wherein the wet bulb temperature determining means includes means (20) for determining the moisture content of the air surrounding the cooling tower (10).

3. A system according to claim 1, wherein the wet bulb temperature determining means includes means (22) for determining the enthalpy of the air surrounding the cooling tower (10).

4. A system according to claim 2, wherein the moisture content determining means (20) is operative to produce a signal (w) indicative of the moisture content of the air surrounding the cooling tower (10), and a means (22) for determining the enthalpy of the air surrounding the cooling tower (10) is connected to receive the signal (w) as an input thereto.

5. A system according to claim 2 or claim 4, wherein the moisture content determining means (20) comprises one or more function blocks arranged in a logic configuration.

6. A system according to claim 3 or claim 4, wherein the enthalpy determining means (22) comprises one or more function blocks arranged in a logic configuration.

## Patentansprüche

1. System zur Steuerung des Betriebs eines Kühlturmes mit Einrichtungen (20, 22) zur Bestimmung der Verdunstungsthermometer-Temperatur der den Kühlturm (10) umgebenden Luft und zur Erzeugung eines hierfür repräsentativen Signals und mit ersten Einrichtungen (66) zum Vergleichen des die Verdunstungsthermometer-Temperatur der den Kühlturm umgebenden Luft repräsentierenden Signals mit einem die Wassertemperatur im Kühlturm repräsentierenden Signal, um ein Ausgangssignal zu erzeugen, das zur Steuerung der Temperatur des Wassers in dem Kuhlturm (10) benutzbar ist, gekennzeichnet durch Einrichtungen (62) zur Einstellung des die Verdunstungsthermometer-Temperatur repräsentierenden Signals um eine vorbestimmte Menge (A), bevor dieses mit Hilfe der ersten Vergleichseinrichtung (66) mit dem die Temperatur des Wassers in dem Kühlturm (10) repräsentierenden Signal verglichen wird, Einrichtungen zur Erzeugung eines eine vorbestimmte Bezugstemperatur repräsentierenden Signals und zweite Einrichtungen (64) zum Vergleichen des Signals für die eingestellte Verdunstungsthermometer-Temperatur mit dem Signal für die vorbestimmte Bezugstemperatur und zum Vergleichen des Signals für die eingestellte Verdunstungsthermometer-Temperatur bzw. des Signals für die vorbestimmte Bezugstemperatur, je nachdem, welche die höhere Temperatur ist, mit Hilfe der ersten Vergleichseinrichtung (66) mit dem die Temperatur des Wassers in dem Kühlturm (10) repräsentierenden Signal, wobei das Ausgangssignal mit Hilfe der ersten Vergleichseinrichtung (66) in Reaktion auf einen Unterschied zwischen der Temperatur des Wassers in dem Kühlturm (10) und der höheren der beiden, der eingestellten Verdunstungsthermometer-Temperatur und der vorbestimmten Bezugstemperatur, erzeugt wird.

2. System nach Anspruch 1, bei dem die die Verdunstungsthermometer-Temperatur bestimmende Einrichtung eine Einrichtung (20) zur Bestimmung des Feuchtigkeitsgehaltes der den Kühlturm (10) umgebenden Luft enthält.

3. System nach Anspruch 1, bei dem die die Verdungstungsthermometer-Temperatur bestimmende Einrichtung eine Einrichtung (22) zur Bestimmung der Enthalpie der den Kühlturm (10) umgebenden Luft enthält.

4. System nach Anspruch 2, bei dem die den Feuchtigkeitsgehalt bestimmende Einrichtung (20) so arbeitet, daß sie ein Signal (w), das den Feuchtigkeitsgehalt der den Kühlturm (10) umgebenden Luft anzeigt, erzeugt, und daß eine Einrichtung (22) zur Bestimmung der Enthalpie der den Kühlturm (10) umgebenden Luft so verbunden ist, daß sie das Signal (w) als Eingangssignal aufnimmt.

5. System nach Anspruch 2 oder Anspruch 4, bei dem die den Feuchtigkeitsgehalt bestimmende Einrichtung (20) einen oder mehrere Funktionsblöcke aufweist, die in einer logischen Konfiguration angeordnet sind.

6. System nach Anspruch 3 oder Anspruch 4, bei dem die die Enthalpie bestimmende Einrichtung (22) einen oder mehrere Funktionsblöcke aufweist, die in einer logischen Konfiguration angeordnet sind.

## Revendications

1. Un système destiné à commander le fonctionnement d'une tour de refroidissement, ce système comprenant des moyens (20, 22) destinés à déterminer la température de boule mouillée de l'air qui environne la tour de refroidissement (10) et à produire un signal représentatif de cette température, et des premiers moyens (66) destinés à comparer le signal représentant la température de boule mouillée de l'air environnant la tour de refroidissement avec un signal représentant la température de l'eau dans la tour de refroidissement, pour produire un signal de sortie qu'on utilise pour commander la température de l'eau dans la tour de refroidissement (10), le système étant caractérisé par des moyens (62) destinés à modifier d'une quantité prédéterminée (A) le signal représentant la température de boule mouillée, avant sa comparaison par les premiers moyens de comparaison (66) avec le signal représentant la température de l'eau dans la tour de refroidissement (10), des moyens destinés à établir un signal représentant une température de référence fixée à l'avance, et des seconds moyens (64) destinés à comparer le signal de température de boule mouillée modifié avec le signal de température de référence fixé à l'avance, et à faire en sorte que le signal représentant la température la plus élevée, parmi le signal de température de boule mouillée modifié et le signal de température de référence fixé à l'avance, soit comparé par les premiers moyens de comparaison (66) avec le signal représentant la température de l'eau dans la tour de refroidissement (10), les premiers moyens de comparaison (66) produisant le signal de sortie sous la dépendance d'une différence entre la température de l'eau dans la tour de refroidissement (10) et la température la plus élevée entre la température de boule mouillée modifiée et la température de référence fixée à l'avance.

2. Un système selon la revendication 1, dans lequel les moyens de détermination de température de boule mouillée comprennent des moyens (20) destinés à déterminer le taux d'humidité de l'air qui environne la tour de refroidissement (10).

3. Un système selon la revendication 1, dans lequel les moyens de détermination de température de boule mouillée comprennent des moyens (22) destinés à déterminer l'enthalpie de l'air qui environne la tour de refroidissement (10).

4. Un système selon la revendication 2, dans lequel les moyens de détermination de taux d'humidité (20) produisent un signal (w) indiquant le taux d'humidité de l'air qui environne la tour de refroidissement (10), et des moyens (22) destinés à déterminer l'enthalpie de l'air qui environne la tour de refroidissement (10) sont connectés de façon à recevoir ce signal (w) en tant que l'un de leurs signaux d'entrée.

5. Un système selon la revendication 2 ou la revendication 4, dans lequel les moyens de détermination de taux d'humidité (20) comprennent un ou plusieurs blocs fonctionnels associés en une configuration logique.

6. Un système selon la revendication 3 ou la revendication 4, dans lequel les moyens de détermination d'enthalpie (22) comprennent un ou plusieurs blocs fonctionnels associés en une configuration logique.

FIG.1

FIG.2

## FIG.3

## FIG.4

## FIG.5

## FIG.6